# EUROPÄISCHE PATENTSCHRIFT

(11) **EP 3 471 908 B1**
(45) Veröffentlichungstag und Bekanntmachung des Hinweises auf die Patenterteilung: **11.09.2019**
(21) Anmeldenummer: 17739193.5
(22) Anmeldetag: 10.07.2017
(51) Int. Cl.: B23G 5/18, B23G 7/02

(54) **WERKZEUG ZUR ERZEUGUNG EINES INNENGEWINDES IN EINER WERKSTÜCK-VORBOHRUNG**
TOOL TO PRODUCE AN INTERNAL THREAD IN THE PREDRILLED HOLE OF A WORKPIECE
OUTIL POUR PRODUIRE UN TARAUDAGE INTERIEUR DANS LE TROU PRÉ-PERCÉ DU PIÈCE

(30) Priorität: 10.08.2016 DE 102016009738
(43) Veröffentlichungstag der Anmeldung: 24.04.2019
(73) Patentinhaber: AUDI AG, 85045 Ingolstadt (DE)
(72) Erfinder: KOPTON, Peter, 85092 Kösching (DE)
(86) Internationale Anmeldenummer: PCT/EP2017/000808
(87) Internationale Veröffentlichungsnummer: WO 2018/028810

(56) Entgegenhaltungen:
- EP-A1- 0 767 024
- EP-A1- 0 780 182
- GB-A- 2 335 878
- US-A- 1 475 561
- US-A- 3 097 426

## Beschreibung

Die Erfindung betrifft ein Werkzeug zur Erzeugung eines Innengewindes in einer Werkstück-Vorbohrung nach dem Oberbegriff des Patentanspruches 1. Ein solches Werkzeug ist aus dem Dokument US1,475,561 A bekannt.

In einer Werkstück-Vorbohrung kann ein Innengewinde durch spanendes Gewindeschneiden oder durch ein spanloses Gewindeformen erzeugt werden. Beim Gewindeformen wird das Werkstück-Material an der Vorbohrungs-Wand plastisch verformt, und zwar unter Bildung des Innengewindes.

In einem herkömmlichen Verfahren wird zunächst eine Werkstück-Vorbohrung bereitgestellt, in der mittels eines Gewindeerzeugungs-Werkzeuges (das heißt Gewindeschneider oder Gewindeformer) ein Innengewinde erzeugt wird, das einen Gewinde-Außendurchmesser und einen Gewinde-Kerndurchmesser aufweist. In einem ersten Verfahrensschritt wird das Gewindeerzeugungs-Werkzeug in einem Gewindeerzeugungs-Hub mit einem definierten Gewindeerzeugungs-Vorschub und einer damit synchronisierten Gewindeerzeugungs-Drehzahl bis zum Erreichen einer Soll-Gewindetiefe in die Werkstück-Vorbohrung eingefahren, wodurch sich das Innengewinde bildet. Anschließend erfolgt ein gegenläufiger Reversier-Hub, bei dem das Gewindeerzeugungs-Werkzeug aus dem Innengewinde der Werkstück-Vorbohrung herausgefahren wird, und zwar mit einem gegenläufigen Reversier-Vorschub sowie einer damit synchronisierten gegenläufigen Reversier-Drehzahl, so dass das Gewindeerzeugungs-Werkzeug im Wesentlichen belastungsfrei durch den Gewindegang des Innengewindes aus der Vorbohrung herausgeführt werden kann.

Das so in der Werkstück-Vorbohrung gebildete Innengewinde weist einen radial äußeren Gewindegrund und einen radial inneren Gewindescheitel auf, die in der Bohrungs-Radialrichtung um eine Profilhöhe voneinander beabstandet sind. Speziell bei einem spanlosen Gewindeform-Prozess können sich aufgrund der plastischen Verformung des Werkstück-Materials Fehlerstellen bzw. Materialschwächungen im geformten Innengewinde bilden. Diese treten insbesondere am radial inneren Gewindescheitel des Innengewindes auf und beeinträchtigen das Setzverhalten eines in das Innengewinde verschraubten Schraubelementes.

Aus der DE 2 058 991 ist ein Gewindeform-Werkzeug zum Formen von Innengewinden bekannt, das einen Schneidenkopf zur spanenden Feinbearbeitung bzw. zum Vorreiben einer Werkstück-Vorbohrung aufweist. Aus der DE 79 22 782 U1 ist ein kombiniertes Werkzeug zum Bohren und Gewindeformen bekannt, bei dem in einem Arbeitsgang ein Gewinde gebohrt und geformt werden kann.

Aus der DE 696 21 092 T2 ist ein gattungsgemäßes Gewindeerzeugungs-Werkzeug bekannt, mit dem zunächst ein Innengewindeprofil an der Vorbohrungs-Wand erzeugt wird. Das Innengewindeprofil weist den endgültigen Gewinde-Außendurchmesser sowie einen Gewinde-Innendurchmesser auf, der kleiner ist als der Gewinde-Kerndurchmesser im Endbearbeitungszustand des Innengewindes. Anschließend erfolgt ein Endbearbeitungsschritt, bei dem der Gewinde-Innendurchmesser des Innengewindeprofils auf den endgültigen Kerndurchmesser des Innengewindes aufgeweitet wird. Die Aufweitung des Innengewindeprofils erfolgt in einer Spanbearbeitung, zum Beispiel durch Schleifen oder Bohren, bei der das Innengewindeprofil auf den Gewinde-Kerndurchmesser geschliffen oder aufgebohrt wird.

Die Aufgabe der Erfindung besteht darin, ein Werkzeug zur Erzeugung eines Innengewindes in einer Werkstück-Vorbohrung bereitzustellen, mit dem eine dauerhaft betriebssichere Schraubverbindung gewährleistet ist.

Die Aufgabe ist durch die Merkmale des Patentanspruches 1 gelöst. Bevorzugte Weiterbildungen sind in den abhängigen Ansprüchen offenbart.

Wie oben im gattungsgemäßen Stand der Technik bereits dargelegt, wird auch erfindungsgemäß mit dem Gewindeerzeugungs-Werkzeug zunächst ein Innengewindeprofil an der Vorbohrungs-Wand erzeugt. Das Innengewindeprofil weist den endgültigen Gewinde-Außendurchmesser sowie einen Gewinde-Innendurchmesser auf, der kleiner ist als der Gewinde-Kerndurchmesser im Endbearbeitungszustand des Innengewindes. Anschließend erfolgt ein Endbearbeitungsschritt, bei dem der Gewinde-Innendurchmesser des Innengewindeprofils auf den endgültigen Kerndurchmesser des Innengewindes aufgeweitet wird. Die Aufweitung des Innengewindeprofils erfolgt in einer Spanbearbeitung, zum Beispiel durch Schleifen oder Bohren, bei der das Innengewindeprofil auf den Gewinde-Kerndurchmesser geschliffen oder aufgebohrt wird.

Es hat sich jedoch gezeigt, dass die bei der Spanbearbeitung anfallenden Späne zu einer Beschädigung des Innengewindes führen können. Vor diesem Hintergrund ist gemäß dem kennzeichnenden Teil des Patentanspruches 1 dem Bohrabschnitt des Werkzeugs zumindest eine Spannut zugeordnet, mittels der die bei der Aufweitung des Gewinde-Innendurchmessers bis auf den Gewinde-Kerndurchmesser anfallenden Späne abtransportiert werden können. Generell können eine oder mehrere Spannuten im Werkzeug ausgebildet werden. Im Hinblick auf die beim Bearbeitungsprozess auf das Werkzeug wirkenden mechanischen Spannungen ist jedoch besonders bevorzugt, wenn genau eine Spannut im Werkzeug ausgebildet ist, um dessen Bauteilstabilität nicht zu beeinträchtigen. Die Spannut kann sich linear oder schraubenlinienförmig entlang der Werkzeugachse über eine Nutlänge erstrecken. Bevorzugt kann die Spannut sich durch den Gewindeformabschnitt erstrecken und darüber hinaus in Richtung auf einen Werkzeug-Spannschaft verlängert sein.

Das Gewindeerzeugungs-Werkzeug kann bevorzugt ein Innengewindeförmer sein, bei dem das Innengewindeprofil in einem spanlosen Gewindeform-Prozess, d.h. unter geringfügiger plastischer Verformung des Werkstück-Materials, an der Vorbohrungs-Wand gebildet wird. Die nachfolgenden Erfindungsaspekte sind mit Bezug auf einen spanlosen Gewindeform-Prozess erläutert. Die Erfindung ist jedoch nicht auf einen solchen spanlosen Gewindeform-Prozess begrenzt, sondern kann bei beliebigen Gewindeerzeugungs-Prozessen genutzt werden.

Das Gewindeform-Werkzeug kann in einem Gewindeform-Hub in die Werkstück-Vorbohrung eingefahren werden, und zwar unter Bildung des Innengewindeprofils. Der Gewindeform-Vorschub sowie die Gewindeform-Drehzahl sind dabei aufeinander abgestimmt oder synchronisiert, um das beabsichtigte Innengewindeprofil bis zum Erreichen einer Soll-Gewindetiefe zu formen. Anschließend erfolgt ein Reversier-Hub, bei dem das Gewindeform-Werkzeug aus dem Innengewindeprofil der Vorbohrung herausgeführt wird. Im Reversier-Hub wird das Gewindeform-Werkzeug mit einem gegenläufigen Reversier-Vorschub sowie einer damit synchronisierten gegenläufigen Reversier-Drehzahl angetrieben. Dadurch ist gewährleistet, dass ein am Werkzeug ausgebildeter Gewindeformabschnitt im Wesentlichen belastungsfrei durch den Gewindegang des in der Werkstück-Vorbohrung erzeugten Innengewindeprofils herausgeführt wird.

Im oben angedeuteten Gewindeform-Prozess kann sich am radial inneren Gewindescheitel des geformten Innengewindeprofils eine Materialschwächung bzw. eine Material-Fehlerstelle ausbilden, bei der Ausformkrallen vom Werkstück-Vollmaterial nach radial innen vorragen und einen Hohlraum einschließen. Zudem können sich Risse im Gewindescheitel ausbilden. Derartige Fehlerstellen beeinträchtigen das Setzverhalten eines eingeschraubten Schraubelementes. Vor diesem Hintergrund werden im Endbearbeitungsschritt die am-Gewindescheitel gebildeten Materialschwächungen bzw. Fehlerstellen zumindest teilweise, bevorzugt vollständig abgetragen.

Das Gewindeform-Werkzeug kann so ausgebildet sein, dass der Endbearbeitungsschritt entweder gleichzeitig mit dem Gewindeform-Hub oder gleichzeitig mit dem Reversier-Hub erfolgt. In diesem Fall sind im Gewindeform-Werkzeug sowohl ein Gewindeformabschnitt als auch ein Bohr- oder Schleifabschnitt integriert. Alternativ dazu kann der Endbearbeitungsschritt auch mit einem separaten Schleif- oder Bohrwerkzeug erfolgen, mit dem das Innengewindeprofil auf den endgültigen Gewinde-Kerndurchmesser aufgeweitet werden kann.

Ein Gewindeform-Werkzeug zur Durchführung des obigen Verfahrens kann bevorzugt einen Spannschaft und einen daran anschließenden Werkzeugkörper aufweisen. Entlang dessen Werkzeug-Achse kann das Werkzeug einen Gewindeformabschnitt und einen Bohr- oder Schleifabschnitt (nachfolgend vereinfacht als Bohrabschnitt bezeichnet) aufweisen. Mit dem Gewindeformabschnitt wird das Innengewindeprofil in der Vorbohrungs-Wand erzeugt, das noch den Gewinde-Innendurchmesser aufweist. Mit dem Bohrabschnitt kann der Gewinde-Innendurchmesser des Innengewindeprofils bis auf den endgültigen Gewinde-Kerndurchmesser aufgeweitet werden.

Der Gewindeformabschnitt kann zumindest einen Profilzahn aufweisen, der mit einem radial äußeren Profilzahn-Scheitel und einem radial inneren Profilzahn-Grund ausgebildet ist, der über eine Zahnhöhe vom Profilzahn-Scheitel beabstandet ist. Zur Durchführung des erfindungsgemäßen Verfahrens liegt der radial äußere Profilzahn-Scheitel auf einer Kreislinie, deren Durchmesser größer als der Vorbohrungs-Durchmesser ist. Zudem liegt der radial innere Profilzahn-Grund auf einer Kreislinie, deren Durchmesser kleiner als der Vorbohrungs-Durchmesser ist.

In einer technischen Umsetzung kann der Gewindeformabschnitt, in einer Werkzeug-Umfangsrichtung betrachtet, umfangsverteilte Profilzähne aufweisen. Diese sind in an sich gängiger Praxis über zumindest eine axial verlaufende Schmiernut voneinander beabstandet. Während der Gewindeformung wird über die Schmiernut ein Schmier- und Kühlmittel zu den Profilzähnen geführt, um eine einwandfreie Gewindeformung zu gewährleisten. Die Schmiernuttiefe kann, in der Radialrichtung betrachtet, wesentlich kleiner sein als die Spannuttiefe. Auf diese Weise ist gewährleistet, dass einerseits ausreichend Schmier- und/oder Kühlmittel über die Schmiernut zu den Profilzähnen des Gewindeformabschnittes zuführbar ist, und andererseits über die querschnittsgroße Spannut die anfallenden Späne einwandfrei abtransportiert werden können (querschnittsklein).

Der am Gewindeform-Werkzeug ausgebildete Bohrabschnitt bewirkt ein Aufbohren des Innengewindeprofils auf den Gewinde-Kerndurchmesser. Erfindungsgemäß aufweist der Bohrabschnitt zumindest eine Längsschneide mit einer radial äußeren Längsschneidkante aufweisen, die geradlinig oder spiralförmig entlang der Werkzeug-Achse verläuft. Die Längsschneidkante liegt auf einem Kantendurchmesser, der kleiner als der Vorbohrungs-Durchmesser, jedoch größer als der Innendurchmesser des Innengewindeprofils ist.

In einer bevorzugten Ausführungsform kann der Bohrabschnitt unmittelbar an der Werkzeugspitze ausgebildet sein und in Richtung auf den Werkzeug-Spannschaft in den Gewindeformabschnitt übergehen. In diesem Fall kann der Bohrabschnitt während des Gewindeform-Hubes belastungsfrei in die noch unbearbeitete Werkstück-Vorbohrung eingeführt werden. Im anschließenden Reversier-Hub wird das Innengewindeprofil mit Hilfe des Bohrabschnittes auf den Gewinde-Kerndurchmesser aufgebohrt, wodurch das Innengewinde fertiggestellt ist.

In der obigen Werkzeug-Geometrie kann die Längsschneidkante an einer, von der Werkzeugspitze abgewandten Schneidecke in eine Querschneide übergehen, die quer zur Werkzeug-Achse verläuft. Der Aufbohr-Vorgang erfolgt somit bevorzugt mit Hilfe von sowohl der Querschneide als auch der Längsschneide, wodurch die Belastung der Längsschneide beim Aufbohrvorgang reduzierbar ist.

Erfindungsgemäß erstreckt sich die Längsschneidkante entlang der Werkzeug-Achse nicht linear geradlinig zwischen zwei Schneidecken erstreckt, sondern vielmehr einen radial nach innen gebogenen Kantenverlauf aufweist. Dadurch werden die beim Aufbohrvorgang gebildeten Schnittflächenkanten am erzeugten Innengewinde entgratet.

Für ein einwandfreies Innengewinde ist es von Bedeutung, dass einerseits die beim Gewindeformen gebildeten Materialschwächungen bzw. Fehlerstellen am Innengewindescheitel beim Endbearbeitungsschritt vollständig abgetragen werden. Der Materialabtrag erfolgt unter Reduzierung der Innengewindeprofil-Höhe. Andererseits ist es von Bedeutung, dass die nach dem Materialabtrag noch verbleibende Innengewindeprofil-Höhe noch ausreichend groß ist, um eine einwandfreie Schraubverbindung mit einem Schraubelement zu gewährleisten.

Vor diesem Hintergrund kann die folgende Maßnahme getroffen werden: So kann am Profilzahn-Grund des werkzeugseitigen Gewindeformabschnitts eine taschenförmige Ausnehmung vorgesehen sein, wodurch der beim Gewindeformen verfügbare Verdrängungsraum für das Werkstück-Material nach radial innen vergrößert ist. Durch den radial nach innen vergrößerten Verdrängungsraum werden die am Gewindescheitel gebildeten Materialschwächungen/Fehlerstellen weiter nach radial innen verlagert (bei gleichzeitiger Reduzierung des Innendurchmessers des Innengewindeprofils). Dies führt dazu, dass im Endbearbeitungsschritt einerseits die Materialschwächungen/Fehlerstellen vollständig abgetragen werden können und andererseits eine ausreichend große Innengewindeprofil-Höhe verbleibt, um eine zuverlässige Schraubverbindung mit dem Schraubelement zu gewährleisten.

Zudem kann der Vorbohrungs-Durchmesser - im Vergleich zu üblichen Gewindeform-Verfahren - reduziert werden. Dadurch wird beim Gewindeform-Prozess zusätzliches Werkstück-Material plastisch verformt und verdrängt.

Um während des Bearbeitungsprozesses einen einwandfreien Späneabtransport aus der Vorbohrung zu gewährleisten, ist bevorzugt die folgende Maßnahme getroffen: So kann die Spannut an dem Bohrabschnitt des Werkzeugs zusätzlich eine Spanleitstufe aufweisen. Diese kann die Spannut in der Axialrichtung zumindest teilweise schließen. Im Bearbeitungsprozess werden die anfallenden Späne an der Spanleitstufe gestaut, wodurch ein Späne-Transport in Richtung Vorbohrungs-Grund verhindert ist und umgekehrt ein Transport der Späne aus der Vorbohrung heraus unterstützt wird.

In einer technischen Umsetzung kann die Spanleitstufe unmittelbar an der Werkzeugspitze ausgebildet sein. Die Spanleitstufe kann dabei unter Reduzierung der Spannuttiefe bis auf eine reduzierte Spannuttiefe gebildet werden. Die Spanleitstufe weist eine Spanleitfläche auf, die an der Längsschneide des Bohrabschnittes mit einer radial äußeren Werkzeug-Freifläche zusammenläuft. Zudem kann die Spanleitfläche an einer stirnseitigen Übergangskante in eine die Werkzeugspitze bildende Stirnfläche übergehen. Die stirnseitige Übergangskante begrenzt einen freien Spannutöffnungsbereich, der in die Werkzeug-Stirnfläche mündet.

Bevorzugt ist es, wenn das Werkzeug im Bearbeitungsprozess an ein Kühlmittelsystem angeschlossen ist. Hierzu kann das Werkzeug einen Zentral-Kühlkanal aufweisen, der vom Werkzeug-Spannschaft in Richtung auf die Werkzeugspitze geführt ist. Der Zentral-Kühlkanal kann mit einem Auslaufkanal in Strömungsverbindung sein, der unmittelbar in die Spannut mündet. Auf diese Weise ergibt sich ein Kühlmittel-Strömungsweg, bei dem das Kühlmittel zunächst im Zentral-Kühlkanal bis zur Werkzeugspitze geführt wird und anschließend dazu gegenläufig im Auslaufkanal aus einer Mündungsöffnung in die Spannut hinein austritt, um den Späne-Abtransport aus der Vorbohrung zu unterstützen.

Die Strömungsverbindung zwischen dem Zentral-Kühlkanal und dem Auslaufkanal kann bei Anwendung des Werkzeugs in einer Sacklochbohrung besonders einfach bewerkstelligt werden: In diesem Fall kann sowohl der Zentral-Kühlkanal als auch der Auslaufkanal in die Werkzeug-Stirnseite münden. Auf diese Weise ist die Strömungsverbindung zwischen dem Zentral-Kühlkanal und dem Auslaufkanal in einfacher Weise durch einen Zwischenraum zwischen der Werkzeugspitze und dem Bohrungsgrund der Sacklochbohrung gebildet.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Figur 1: in einer Teilschnittansicht eine Werkstück-Vorbohrung mit einem Innengewinde;
- Figur 2 und 3: ein Gewindeform-Werkzeug in unterschiedlichen Ansichten;
- Figuren 4 bis 8: jeweils Ansichten, die Prozessschritte zur Erzeugung des in der Figur 1 gezeigten Innengewindes veranschaulichen;
- Figur 9: ein Gewindeform-Werkzeug gemäß einem zweiten Ausführungsbeispiel;
- Figur 10: ein Gewindeform-Werkzeug gemäß einem dritten Ausführungsbeispiel;
- Figur 11: eine Schnittansicht entlang der Schnittebene I-I aus der Figur 10;
- Figur 12: eine Vorderansicht auf die Werkzeugspitze des in der Figur 10 gezeigten Gewindeform-Werkzeuges; und
- Figur 13: eine Ansicht entsprechend der Figur 6.

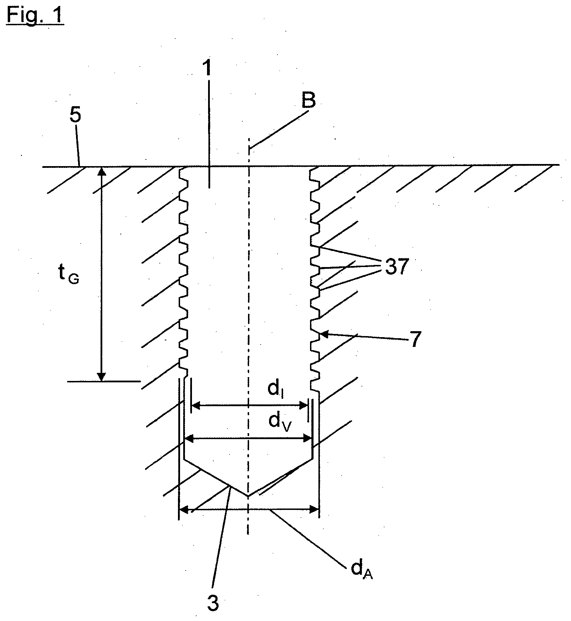

In der Figur 1 ist eine fertiggestellte Gewindesackloch-Bohrung 1 gezeigt. Die Bohrung 1 ist mit ihrem Bohrungsgrund 3 bis zu einer Soll-Bohrtiefe in ein Werkstück 5 eingearbeitet. Zudem weist die Bohrung 1 ein Innengewinde 7 auf, das sich entlang einer Bohrungs-Achse B bis zu einer nutzbaren Soll-Gewindetiefe t_{G} erstreckt. Das Innengewinde 7 weist einen Gewinde-Außendurchmesser d_{A} sowie einen Gewinde-Kerndurchmesser dₖ auf.

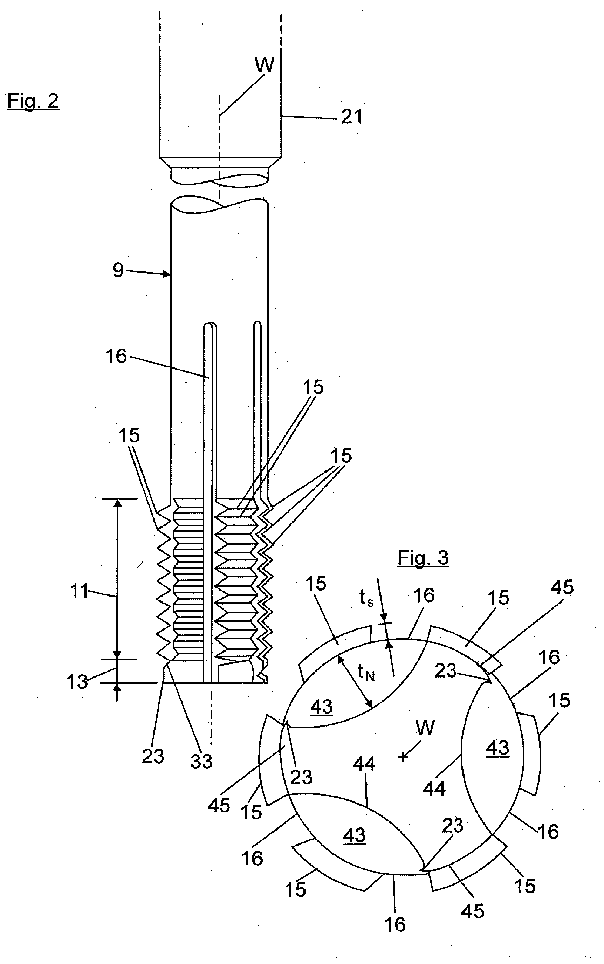

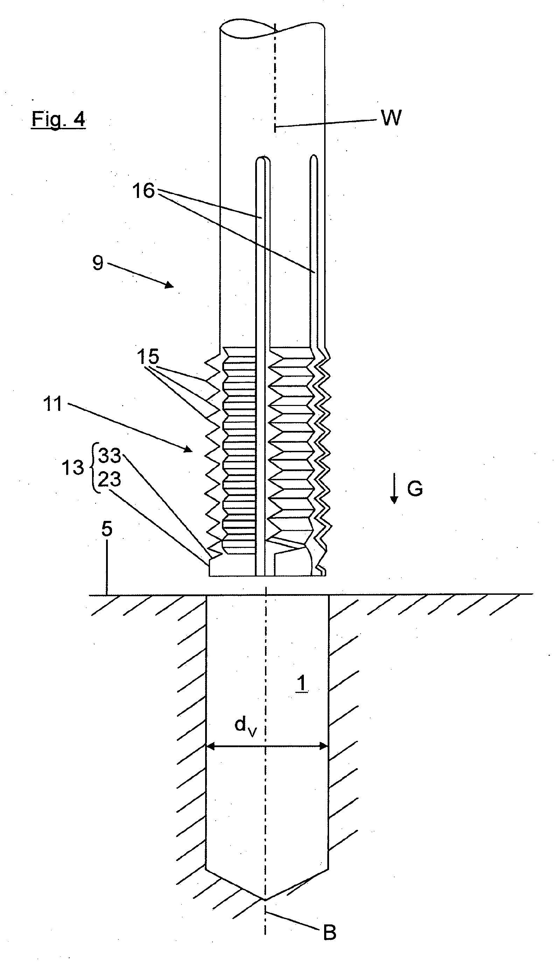

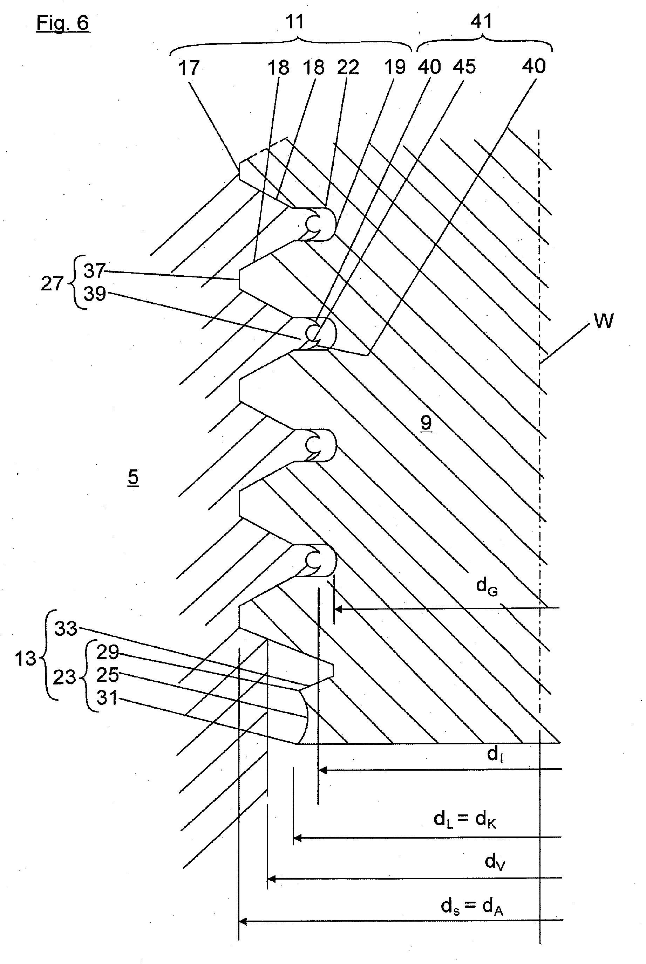

Das in der Figur 1 gezeigte Innengewinde 7 wird mit Hilfe des nachfolgend anhand der Figuren 2 und 3 beschriebenen Gewindeform-Werkzeugs 9 durchgeführt. Demzufolge weist das Werkzeug 9 einen Gewindeformabschnitt 11 und einen Bohrabschnitt 13 auf, dessen Funktion später erläutert wird. Der Gewindeformabschnitt 11 ist mit einer Reihe von Profilzähnen 15 realisiert, die jeweils einen radial äußeren Profilzahn-Scheitel 17 (Fig. 6) und einen davon über eine Zahnhöhe beabstandeten radial inneren Profilzahn-Grund 1.9 (Fig. 6) aufweisen. Der Profilzahn-Scheitel 17 liegt in der Figur 6 auf einer Kreislinie, deren Durchmesser d_{S} größer als ein Vorbohrungs-Durchmesser d_{V} (Fig. 1 oder 6) einer Werkstück-Vorbohrung 1 (Fig. 4) ist. Der Profilzahn-Grund 19 liegt dagegen auf einer Kreislinie, deren Durchmesser d_{G} kleiner als der Vorbohrungs-Durchmesser d_{V} ist. Der Aufbau sowie die Geometrie der in den Figuren gezeigten Profilzähne 15 des Gewindeformabschnitts 11 sind von herkömmlicher Machart und aus dem Stand der Technik bekannt.

Gemäß den Figuren 2, 4 oder 6 ist der Bohrabschnitt 13 unmittelbar an der Werkzeugspitze ausgebildet und geht dieser in Richtung auf einen Werkzeug-Spannschaft 21 (Fig. 1) in den Gewindeformabschnitt 11 über. Der Bohrabschnitt 13 weist in der Figur 3 beispielhaft drei gleichmäßig umfangsverteilte Längsschneiden 23 auf. Jede der Längsschneiden 23 ist mit einer Längsschneidkante 25 (Fig. 6) ausgebildet, die auf einem Kantendurchmesser d_{L} liegt, der kleiner als der Vorbohrungs-Durchmesser d_{V} sowie größer als der Gewinde-Innendurchmesser d_{I} eines später beschriebenen Innengewindeprofils 27 (Fig. 6) ist.

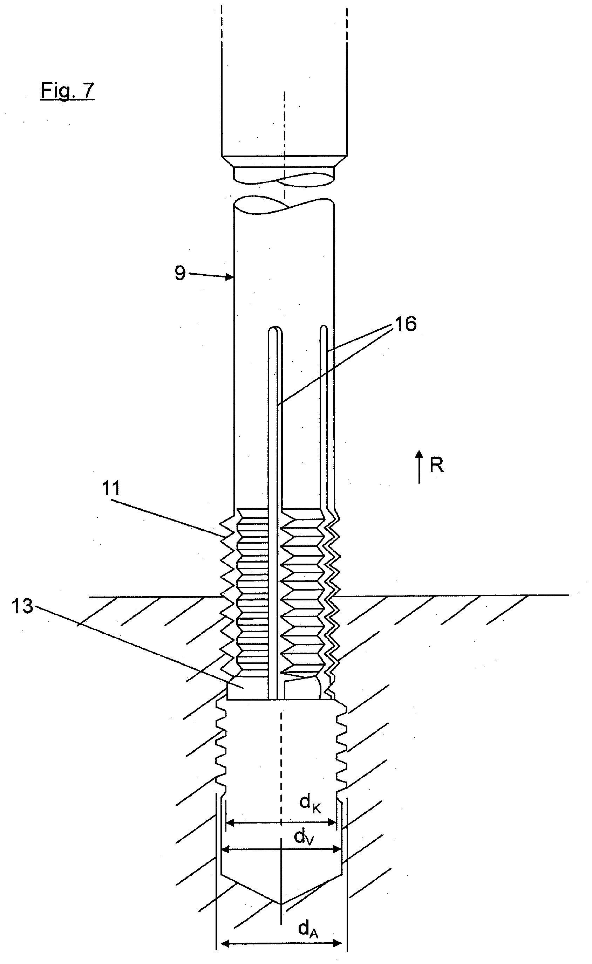

Wie aus der Figur 7 hervorgeht, erstreckt sich die Längsschneidkante 25 entlang der Werkzeug-Achse W zwischen zwei Schneidecken 29, 31. Die Längsschneidkante 25 weist einen radial nach innen gebogenen Kantenverlauf auf, dessen Wirkung später beschrieben ist. Zudem geht die Längsschneidkante 25 an ihrer, von der Werkzeugspitze abgewandten Schneidecke 29 in eine Querschneide 33 über.

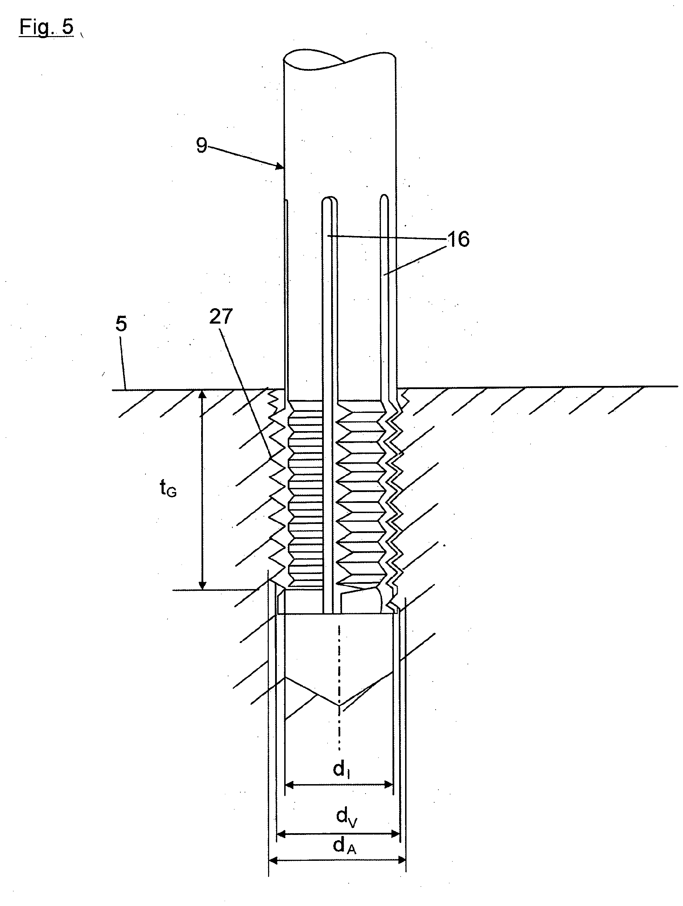

Nachfolgend wird anhand der Figuren 4 bis 8 das Verfahren zur Erzeugung der in der Figur 1 gezeigten Gewindesackloch-Bohrung 1 beschrieben: Demzufolge wird in der Figur 4 das Gewindeform-Werkzeug 9 in einem Gewindeform-Hub G bis zum Erreichen der Soll-Gewindetiefe t_{G} in die Werkstück-Vorbohrung 1 eingefahren, wobei die Werkzeug-Achse W koaxial zur Bohrungs-Achse B ausgerichtet ist. Im Gewindeform-Hub G ist der Werkzeug-Vorschub f_{G} und eine Gewindeform-Drehzahl n_{G} so aufeinander abgestimmt, dass sich ein Innengewindeprofil 27 (Fig. 5 oder 6) bildet. Das Innengewindeprofil 27 weist in der Figur 6 einen radial äußeren Gewindegrund 37 und einen radial inneren Gewindescheitel 39 auf, die in der Radialrichtung um eine Profilhöhe voneinander beabstandet sind. Wie aus der Figur 6 hervorgeht, sind am Gewindescheitel 39 des Innengewindeprofils 27 Materialschwächungen bzw. Fehlerstellen 41 mit Ausformkrallen 40 ausgebildet, die vom Werkstück-Vollmaterial radial nach innen vorragen und einen Hohlraum 45 einschließen. Während des obigen Gewindeform-Hubes G wird der an der Werkzeugspitze ausgebildete Bohrabschnitt 13 belastungsfrei in die Werkstück-Vorbohrung 1 eingefahren.

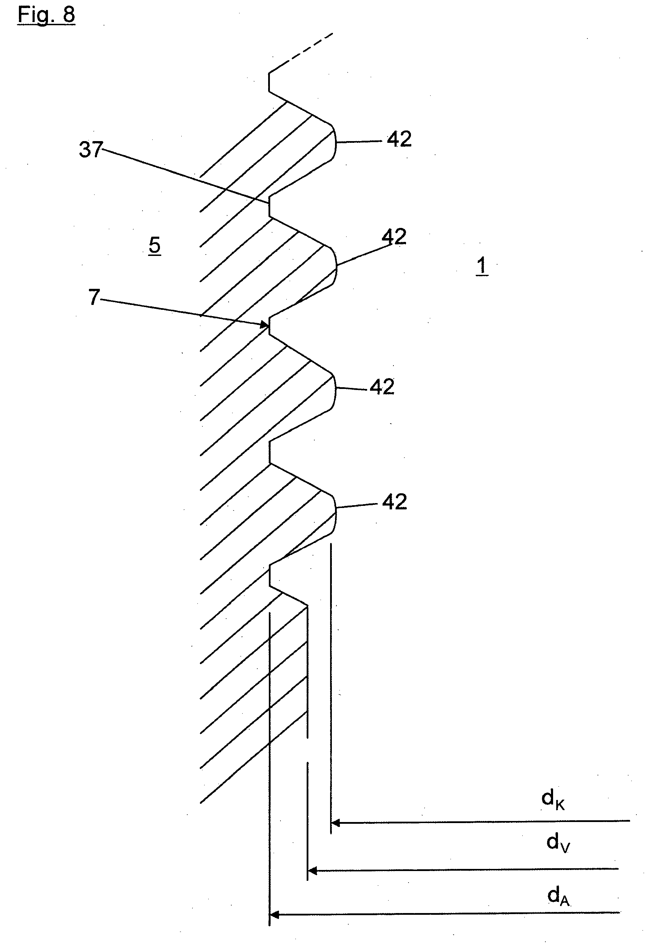

Im anschließenden Reversier-Hub R (Fig. 7) wird der werkzeugseitige Gewindeformabschnitt 11 mit einem gegenläufigen Reversier-Vorschub f_{R} und einer damit synchronisierten gegenläufigen Reversier-Drehzahl n_{R} belastungsfrei entlang des Gewindegangs des Innengewindeprofils 35 aus der Vorbohrung 1 herausgeführt. Während des Reservier-Hubes R erfolgt ein Endbearbeitungsschritt, bei dem der Bohrabschnitt 13 den Gewinde-Innendurchmesser d_{I} bis auf den Gewinde-Kerndurchmesser d_{K} aufbohrt. Der Materialabtrag ist dabei so gewählt, dass die Fehlerstellen 41 am Gewindescheitel 39 komplett abgetragen werden. Durch den in der Figur 6 angedeuteten, radial nach innen gebogenen Kantenverlauf der Längsschneidenkante 25 können zugleich auch die Schnittflächenkanten 42 (Figur 8) am bearbeiteten Gewindescheitel 39 des Innengewindes 7 entgratet werden.

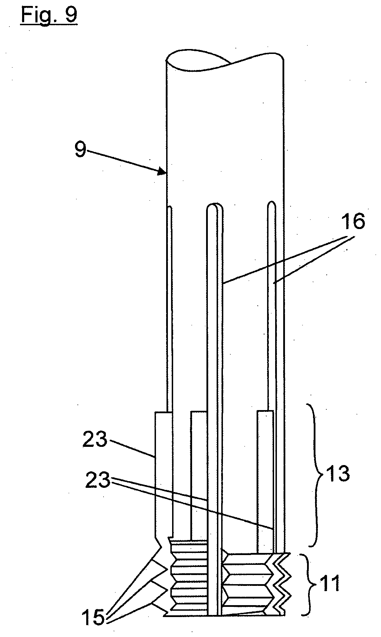

Wie aus der obigen Beschreibung hervorgeht, bilden sich die Fehlerstellen 41 während des Gewindeform-Hubes G unmittelbar am radial inneren Gewindescheitel 39 des Innengewindeprofils 27 aus. Damit gewährleistet ist, dass nach dem Endbearbeitungsschritt die noch verbleibende Innengewinde-Profilhöhe ausreichend groß ist, sind gemäß der Figur 9 folgende Maßnahmen getroffen: So ist der Vorbohrungs-Durchmesser d_{V} - im Vergleich zu herkömmlichen Gewindeform-Verfahren - reduziert. Dadurch wird beim Gewindeform-Prozess zusätzliches Werkstück-Material plastisch verformt und verdrängt. Zusätzlich ist am Profilzahn-Grund 19 des werkzeugseitigen Gewindeformabschnitts 11 eine taschenförmige Ausnehmung 22 (Fig. 6) vorgesehen, wodurch der beim Gewindeformen verfügbare Verdrängungsraum für das Werkstück-Material nach radial innen vergrößert ist. Durch den radial nach innen vergrößerten Verdrängungsraum werden die am Gewindescheitel 39 gebildeten Materialschwächungen/Fehlerstellen 41 weiter nach radial innen verlagert, und zwar bei gleichzeitiger Reduzierung des Innendurchmessers d_{I} des Innengewindeprofils 27. Dies führt dazu, dass im Endbearbeitungsschritt einerseits die Materialschwächungen/Fehlerstellen 41 vollständig abgetragen werden können und andererseits eine ausreichend große Innengewindeprofil-Höhe verbleibt, um eine zuverlässige Schraubverbindung mit dem Schraubelement zu gewährleisten.

In der Figur 9 ist das Gewindeform-Werkzeug 9 gemäß einem zweiten Ausführungsbeispiel gezeigt. Im Unterschied zum vorangegangenen Ausführungsbeispiel ist in der Figur 9 der Bohrabschnitt 13 nicht unmittelbar an der Werkzeugspitze ausgebildet, sondern vielmehr um einen Axialabstand von der Werkzeugspitze versetzt. Der Gewindeformabschnitt 11 erstreckt sich dagegen bis unmittelbar an die Werkzeugspitze. Auf diese Weise wird beim Gewindeform-Hub G nicht nur das Innengewindeprofil 27 geformt, sondern mit dem nacheilenden Bohrabschnitt 13 zugleich auch der Endbearbeitungsschritt durchgeführt, bei dem das erzeugte Innengewindeprofil 27 bis auf den Gewinde-Kerndurchmesser d_{K} aufgebohrt wird.

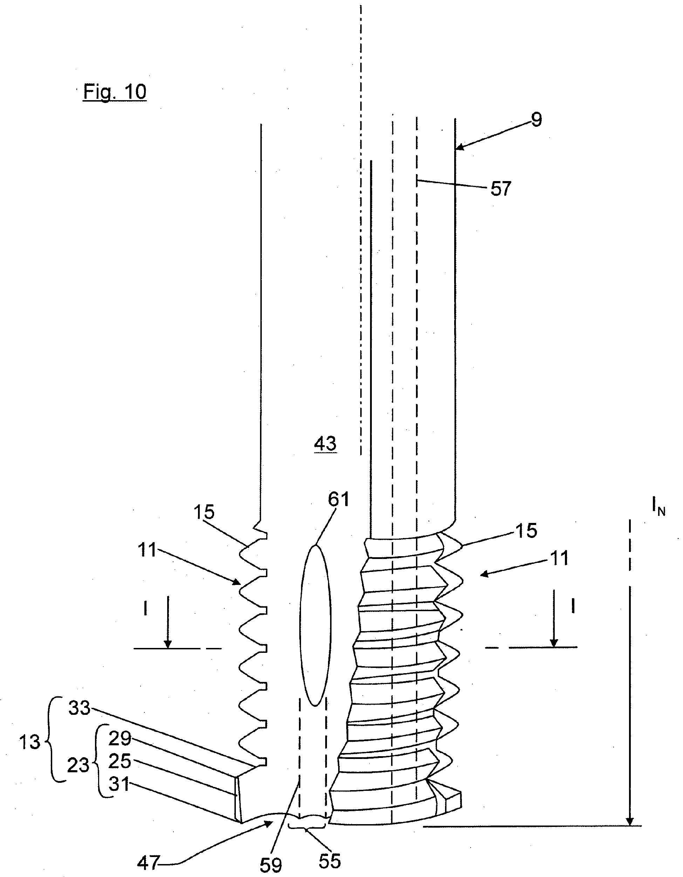

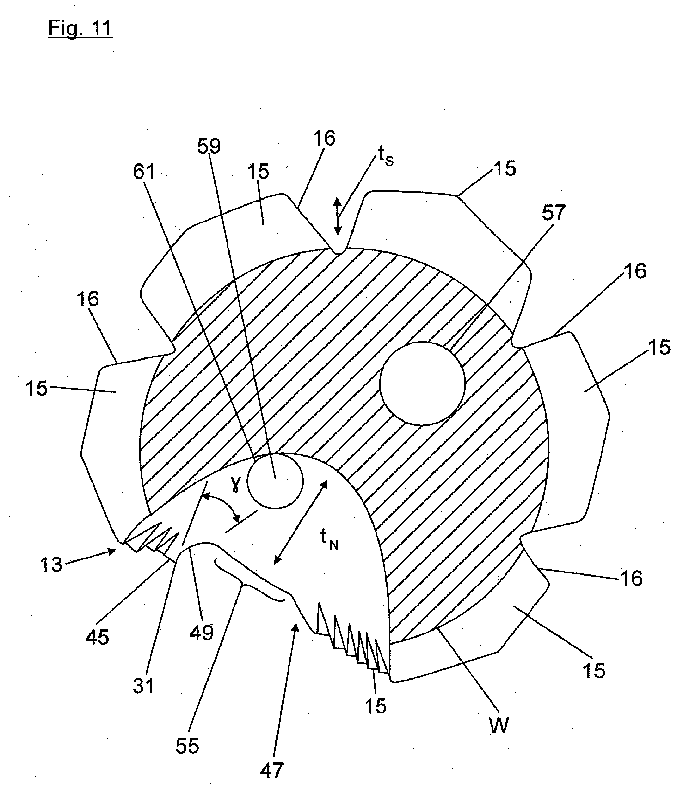

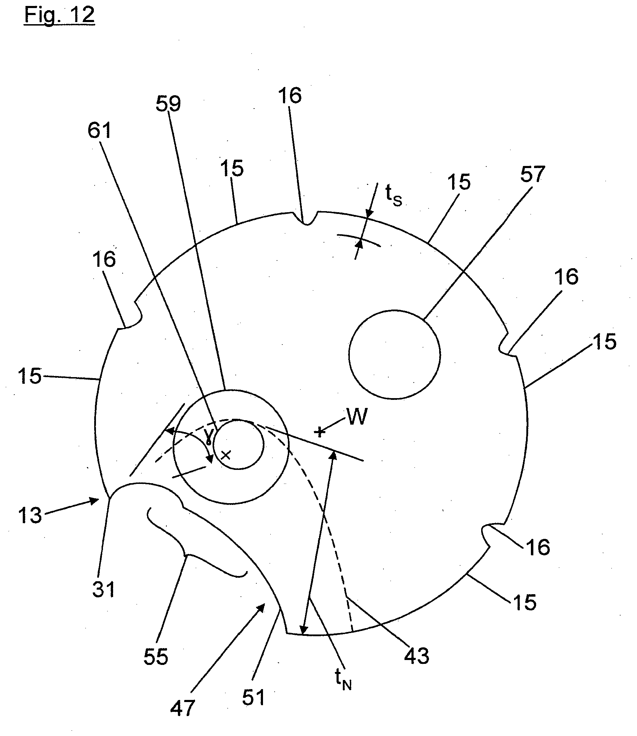

In der Figur 10 ist ein Gewindeform-Werkzeug 9 gemäß einem dritten Ausführungsbeispiel gezeigt, das grundsätzlich baugleich wie das anhand der Figuren 1 bis 8 beschriebene Gewindeform-Werkzeug 9 gemäß dem ersten Ausführungsbeispiel ist. So weist das Gewindeform-Werkzeug 9, wie auch in der Figur 3 zu sehen ist, im Gewindeformabschnitt 13 umfangsverteilte Profilzähne 15 auf. Diese sind über axial verlaufende Schmiernuten 16 voneinander beabstandet. Die Schmiernuten 16 erstrecken' sich in den Figur 2 bis 7 oder in den Figuren 11 und 12 linear in Axialrichtung von der Werkzeugspitze zum Werkzeugschaft 21. Deren Schmiernuttiefe ts (Figur 2, 11 oder 12) ist dabei so ausgelegt, dass im Bearbeitungsprozess zuverlässig Schmier- und/oder Kühlmittel zu den Profilzähnen 15 zuführbar ist, um während der Gewindeformung eine ausreichende Schmier- und/oder Kühlmittel-Versorgung der Profilzähne 15 zu gewährleisten. Zusätzlich zu den Schmiernuten 16 weist das Gewindeform-Werkzeug 9 in der Figur 3 insgesamt drei Spannuten 43 auf, die mit einer Spannuttiefe t_{N} in das Werkzeug eingearbeitet sind. Die Spannuttiefe t_{N} ist dabei wesentlich größer ausgelegt als die Schmiernuttiefe t_{S}. Über die Spannuten 43 werden die bei der Aufweitung des Gewinde-Innendurchmessers di bis auf den Gewinde-Kerndurchmesser d_{K} anfallenden Späne aus der Vorbohrung 1 abtransportiert.

In der Figur 3 ist jede der Spannuten 43 durch eine Spanfläche 44 begrenzt, die zusammen mit einer radial äußeren Werkzeug-Freifläche 45 an der Längsschneide 23 des Bohrabschnittes 13 zusammenläuft. Die in der Figur 3 gezeigten, insgesamt drei umfangsverteilten Spannuten 43 erstrecken sich in Axialrichtung über eine stark reduzierte Nutlänge I_{N} lediglich zwischen der Werkzeugspitze und dem Gewindeformabschnitt 3, ohne diesen in Axialrichtung zu durchsetzen.

Im Unterschied dazu ist im dritten Ausführungsbeispiel der Figuren 10 bis 13 lediglich eine einzige Spannut 43 im Werkzeug ausgebildet. Diese erstreckt sich linear entlang der Werkzeugachse W mit einer Nutlänge I_{N} durch den Gewindeformabschnitt 3 hindurch und ist bis zum Werkzeug-Spannschaft 21 verlängert. Auf diese Weise ist - im Vergleich zum ersten Ausführungsbeispiel - ein wesentlich verbesserter Späne-Abtransport ermöglicht.

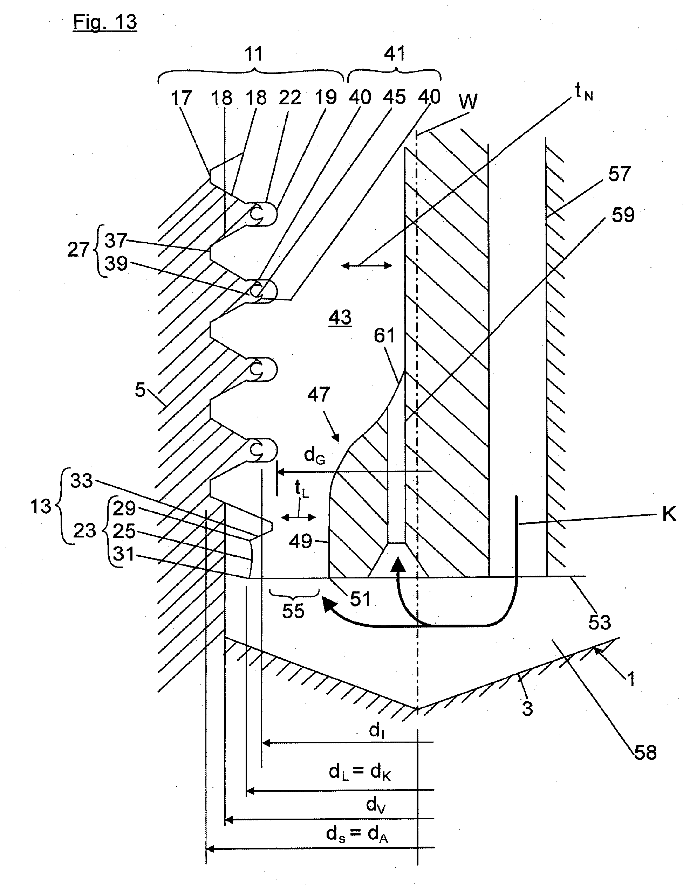

Wie aus den Figuren 10 bis 13 weiter hervorgeht, weist die Spannut 43 am Bohrabschnitt 13 zusätzlich eine Spanleitstufe 47 auf, die teilweise die Spannut 43 in der Axialrichtung schließt. Mittels der Spanleitstufe 47 werden die im Bearbeitungsprozess gebildeten Späne in Richtung auf den Vorbohrungs-Grund 3 gestaut und wird ein Späne-Transport aus der Vorbohrung 1 heraus unterstützt. Die Spanleitstufe 47 ist in den Figuren 10 bis 13 unmittelbar an der Werkzeugspitze ausgebildet. Zudem weist die Spanleitstufe 47 eine stirnseitige Spanleitfläche 49 auf, die im Vergleich zur Spannuttiefe t_{N} der Spannut 43 mit einer reduzierten Nuttiefe t_{L} radial nach werkzeuginnen versetzt ist (Figur 13).

Die Spanleitfläche 49 der Spanleitstufe 47 läuft - unter Bildung der Längsschneide 23 - mit einer radial äußeren Freifläche 45 zusammen (Figur 11). In der Axialrichtung betrachtet geht die Spanleitfläche 49 an einer stirnseitigen Übergangskante 51 in eine Werkzeug-Stirnfläche 53 über (Figuren 12 oder 13), die die Werkzeugspitze des Gewindeform-Werkzeuges 9 bildet. Die stirnseitige Übergangskante 51 begrenzt dabei einen freie Spannut-Öffnungsbereich 55 (Figuren 10 bis 13), der in die Werkzeug-Stirnfläche 53 mündet.

Das in den Figuren 10 bis 13 gezeigte Gewindeform-Werkzeug 9 ist an ein Kühlmittelsystem anschließbar. Hierzu weist das Werkzeug 9 einen Zentral-Kühlkanal 57 auf, der axial vom Werkzeug-Spannschaft 21 in Richtung auf die Werkzeugspitze geführt ist. Achsparallel dazu erstreckt sich im Werkzeug 9 ein Auslaufkanal 59, der mit einer Mündungsöffnung 61 in die Spannut 43 mündet. Sowohl der Zentral-Kühlkanal 57 als auch der Auslaufkanal 59 münden in die Werkzeug-Stirnseite 53. Bei der Gewindeformung in einer Sacklochbohrung ergibt sich somit ein Kühlmittelweg K (Figur 13), bei dem das Kühlmittel zunächst über den Zentral-Kühlkanal 57 in einen Zwischenraum 58 einströmt, der zwischen der Werkzeugspitze und dem Bohrungsgrund 3 gebildet ist. Im weiteren Verlauf strömt das Kühlmittel K durch den Auslaufkanal 59 gegenläufig in die Spannut 43 ein, um den Späne-Abtransport zu unterstützen. Zudem strömt das Kühlmittel K vom Zwischenraum 58 über den freien Spannut-Öffnungsbereich 55 in die Spannut 43 ein, um den Späne-Abtransport weiter zu unterstützen. Für einen wirkungsvollen Späne-Abtransport ist es von Relevanz, dass der Strömungsquerschnitt des Zentral-Kühlkanals 57 größer ist als der Gesamtquerschnitt aus dem Spannut-Öffnungsbereich 55 und dem Auslaufkanal 59. Auf diese Weise werden unter Erzeugung eines Venturi-Effekts die Späne mit hoher Strömungsgeschwindigkeit aus der Spannut 43 transportiert.

## Patentansprüche

1. Werkzeug zur Erzeugung eines Innengewindes (7) in einer Werkstück-Vorbohrung (1) mit einem Gewinde-Außendurchmesser (d_{A}) und einem Gewinde-Kerndurchmesser (d_{K}), welches Werkzeug (9) einen Gewindeformabschnitt (11) aufweist, mit dem ein Innengewindeprofil (27) in einer Vorbohrungs-Wand erzeugbar ist, das den Gewinde-Außendurchmesser (d_{A}) und einen Gewinde-Innendurchmesser (d_{I}) aufweist, wobei das Werkzeug (9) einen Bohrabschnitt (13) aufweist, mit dem der Gewinde-Innendurchmesser (d_{I}) des Innengewindeprofils (27) in einer Spanbearbeitung bis auf den Gewinde-Kerndurchmesser (d_{K}) aufweitbar ist, wobei dem Bohrabschnitt (13) des Werkzeugs (9) zumindest eine Spannut (43) zugeordnet ist, mittels der die bei der Aufweitung des Gewinde-Innendurchmessers (d_{I}) bis auf den Gewinde-Kerndurchmesser (d_{K}) anfallenden Späne abtransportierbar sind, wobei der Bohrabschnitt (13) zumindest eine Längsschneide (23) mit einer radial äußeren Längsschneidkante (25) aufweist, **dadurch gekennzeichnet, dass** sich die Längsschneidkante (25) in der Werkzeug-Axialrichtung zwischen zwei Schneidecken (29, 31) erstreckt, und dass die Längsschneidkante (25) einen radial nach innen gebogenen Kantenverlauf aufweist, wodurch Schnittflächenkanten am erzeugten Innengewinde (7) entgratet werden können.

2. Werkzeug nach Anspruch 1, **dadurch gekennzeichnet, dass** sich die Spannut (43) schraubenlinienförmig oder linear entlang einer Werkzeugachse (W) mit einer Nutlänge (I_{N}) durch den Gewindeformabschnitt (11) und darüber hinaus in Richtung auf einen Werkzeug-Spannschaft (21) erstreckt.

3. Werkzeug nach Anspruch 1 oder 2, **dadurch gekennzeichnet, dass** der Gewindeformabschnitt (11) zumindest einen Profilzahn (15) mit einem radial äußeren Profilzahn-Scheitel (17) und einen davon über eine Zahnhöhe beabstandeten, radial inneren Profilzahn-Grund (19) aufweist, und dass der Profilzahn-Scheitel (17) auf einer Kreislinie liegt, deren Durchmesser (d_{S}) größer als der Vorbohrungs-Durchmesser (d_{V}) ist, und dass der Profilzahn-Grund (19) auf einer Kreislinie liegt, deren Durchmesser (d_{G}) kleiner als der Vorbohrungs-Durchmesser (d_{V}) ist.

4. Werkzeug nach Anspruch 1, 2 oder 3, **dadurch gekennzeichnet, dass** der Gewindeformabschnitt (11), in einer Werkzeug-Umfangsrichtung betrachtet, umfangsverteilte Profilzähne (15) aufweist, die über zumindest eine axial verlaufende Schmiernut (16) voneinander beabstandet sind, über die bei der Gewindeformung Schmier- und/oder Kühlmittel zu den Profilzähnen (15) führbar ist, und dass eine Spannuttiefe (t_{N}) größer ist als eine Schmiernuttiefe (t_{S}).

5. Werkzeug nach einem der vorhergehenden Ansprüche, **dadurch gekennzeichnet, dass** der Bohrabschnitt (13) an der Werkzeugspitze ausgebildet ist und in Richtung auf einen Werkzeug-Spannschaft (21) in den Gewindeformabschnitt (11) übergeht, und dass während eines Gewindeerzeugungs-Hubes (G) der Bohrabschnitt (13) belastungsfrei in die Werkstück-Vorbohrung (1) eingeführt wird und in einem anschließenden Reversier-Hub (R) der Bohrabschnitt (13) das Innengewindeprofil (27) unter Fertigstellung des Innengewindes (7) auf den Gewinde-Kerndurchmesser (d_{K}) aufbohrt.

6. Werkzeug nach Anspruch 5, **dadurch gekennzeichnet, dass** die Längsschneidkante (25) an einer von der Werkzeugspitze abgewandten Schneidecke (29) in eine Querschneide (33) übergeht, und dass mittels der Querschneide (33) und der Längsschneide (23) beim Reversier-Hub (R) der Materialabtrag erfolgt.

7. Werkzeug nach einem der Ansprüche 1 bis 4, **dadurch gekennzeichnet, dass** der Gewindeformabschnitt (11) unmittelbar an die Werkzeugspitze ausgebildet ist und der Bohrabschnitt (13) um einen Axialversatz von der Werkzeugspitze versetzt ist, und dass der Bohrabschnitt (13) während des Gewindeerzeugungs-Hubes (G) das Innengewindeprofil (27) auf den Gewinde-Kerndurchmesser (d_{K}) aufbohrt und im anschließenden Reversier-Hub (R) belastungsfrei aus dem Innengewinde (7) herausgeführt wird.

8. Werkzeug nach einem der vorhergehenden Ansprüche, **dadurch gekennzeichnet, dass** der Gewindeerzeugungsbereich (11) in der Axialrichtung zumindest zwei Profilzähne (15) aufweist, deren einander zugewandte Zahnflanken (18) eine Formkammer bilden, in die beim Gewindeformen das Werkstück-Material unter plastischer Verformung hinein verdrängt wird, und dass die Formkammer am Profilgrund (19) radial nach innen in eine taschenförmige Ausnehmung (22) übergeht, wodurch der beim Gewindeformen verfügbare Verdrängungsraum für das Werkstück-Material vergrößert ist und der Gewinde-Innendurchmesser (d_{I}) des geformten Innengewindeprofils (27) reduziert wird.

9. Werkzeug nach einem der vorhergehenden Ansprüche, **dadurch gekennzeichnet, dass** die Spannut (43) an dem Bohrabschnitt (13) eine Spanleitstufe (47) aufweist, die zumindest teilweise die Spannut (43) in Axialrichtung schließt, und dass mittels der Spanleitstufe (47) das Abführen der im Bearbeitungsprozess gebildeten Späne in Richtung Vorbohrung verhindert ist und ein Transport der Späne aus der Vorbohrung (1) unterstützt wird.

10. Werkzeug nach Anspruch 9, **dadurch gekennzeichnet, dass** die Spanleitstufe (47) unmittelbar an der Werkzeugspitze ausgebildet ist, und/oder dass die Spanleitstufe (47) unter Reduzierung der Spannuttiefe (t_{N}) auf eine reduzierte Spannuttiefe (t_{L}) gebildet ist.

11. Werkzeug nach Anspruch 9 oder 10, **dadurch gekennzeichnet, dass** die Spanleitstufe (47) eine Spanleitfläche (49) aufweist, die am Bohrabschnitt (13) mit einer radial äußeren Freifläche (45) zusammenläuft, und zwar unter Bildung der Längsschneide (23), und/oder dass die Spanleitfläche (49) an einer stirnseitigen Übergangskante (51) in eine die Werkzeugspitze bildende Stirnfläche (53) übergeht.

12. Werkzeug nach Anspruch 11, **dadurch gekennzeichnet, dass** die stirnseitige Übergangskante (51) einen freien Spannutöffnungsbereich (55) begrenzt, der in die Werkzeug-Stirnfläche (53) mündet.

13. Werkzeug nach einem der vorhergehenden Ansprüche, **dadurch gekennzeichnet, dass** das Werkzeug (9) einen Zentral-Kühlkanal (57) aufweist, der vom Werkzeug-Spannschaft (21) in Richtung auf die Werkzeugspitze geführt ist, und dass der Zentral-Kühlkanal (57) mit einem Auslaufkanal (59) in Strömungsverbindung ist, der in die Spannut (43) mündet, so dass im Bearbeitungsprozess das Kühlmittel (K) im Zentral-Kühlkanal (57) zur Werkzeugspitze geführt wird und dazu gegenläufig im Auslaufkanal (59) aus einer Mündungsöffnung (61) in die Spannut (43) geführt wird, um den Späne-Abtransport zu unterstützen.

14. Werkzeug nach Anspruch 13, **dadurch gekennzeichnet, dass** insbesondere bei Anwendung des Werkzeugs (9) in einer Sacklochbohrung (1), sowohl der Zentral-Kühlkanal (57) als auch der Auslaufkanal (59) in die Werkzeug-Stirnseite (53) münden, um die Strömungsverbindung (K) zwischen dem Zentral-Kühlkanal (57) und dem Auslaufkanal (59) bereitzustellen, und dass der Strömungsquerschnitt des Zentral-Kühlkanals (57) größer ist als der Gesamtquerschnitt aus dem Spannut-Öffnungsbereich (55) und dem Auslaufkanal (59).

## Claims

1. Tool for producing an internal thread (7) in a workpiece pilot hole (1) with a thread external diameter (d_{A}) and a thread core diameter (d_{K}), which tool (9) has a thread form section (11) with which an internal thread profile (27) can be produced in a pilot hole wall, which internal thread profile (27) has the thread external diameter (d_{A}) and a thread internal diameter (d_{I}), wherein the tool (9) has a drill section (13) with which the thread internal diameter (d_{I}) of the internal thread profile (27) can be expanded in a chip processing to the thread core diameter (d_{K}), wherein the drill section (13) of the tool (9) is associated with at least one flute (43) by means of which the chips resulting from the widening of the thread internal diameter (d_{I}) to the thread core diameter (d_{K}) can be removed, wherein the drill section (13) has at least one longitudinal cutting edge (23) with a radially outer longitudinal cutting edge (25), **characterised in that** the longitudinal cutting edge (25) extends in the tool axial direction between two cutting corners (29, 31), and **in that** the longitudinal cutting edge (25) has a radially inwardly bent edge profile, whereby cut surface edges on the generated internal thread (7) can be deburred.

2. Tool according to claim 1, **characterised in that** the flute (43) extends helically or linearly along a tool axis (W) with a groove length (I_{N}) through the thread form section (11) and further toward a tool clamping shank (21).

3. Tool according to claim 1 or 2, **characterised in that** the thread form section (11) has at least one profile tooth (15) with a radially outer profile tooth apex (17) and a radially inner profile tooth base (19) spaced apart therefrom via a tooth height, and **in that** the profile tooth apex (17) lies on a circle whose diameter (d_{S}) is greater than the pilot hole diameter (d_{V}), and **in that** the profile tooth base (19) lies on a circular line whose diameter (d_{G}) is smaller than the pilot hole diameter (d_{V}).

4. Tool according to claim 1, 2 or 3, **characterised in that** the thread form section (11), viewed in a tool circumferential direction, has circumferentially distributed profile teeth (15) which are spaced apart from one another by at least one axially extending lubrication groove (16), via which lubricant and/or coolant can be guided to the profile teeth (15) during thread forming, and **in that** a flute depth (t_{N}) is greater than a lubrication groove depth (t_{S}).

5. Tool according to any one of the preceding claims, **characterised in that** the drill section (13) is formed on the tool tip and merges into the thread form section (11) in the direction of a tool clamping shank (21), and **in that** during a thread-generating stroke (G) the drilling section (13) is inserted into the workpiece pilot hole (1) without load and in a subsequent reversing stroke (R) the drill section (13) drills out the internal thread profile (27) to the thread core diameter (d_{K}) for finishing the internal thread (7).

6. Tool according to claim 5, **characterised in that** the longitudinal cutting edge (25) merges into a transverse cutting edge (33) on a cutting corner (29) facing away from the tool tip, and **in that** the material removal takes place by means of the transverse cutting edge (33) and the longitudinal cutting edge (23) during the reversing stroke (R).

7. Tool according to any one of claims 1 to 4, **characterised in that** the thread form section (11) is formed directly on the tool tip and the drill section (13) is offset from the tool tip by an axial offset, and **in that** the drill section (13) drills out the internal thread profile (27) to the thread core diameter (d_{K}) during the thread-generating stroke (G) and is guided out of the internal thread (7) without load in the subsequent reversing stroke (R).

8. Tool according to any one of the preceding claims, **characterised in that** the thread-generating region (11) has at least two profile teeth (15) in the axial direction, whose mutually facing tooth flanks (18) form a moulding chamber into which the workpiece material is displaced under plastic deformation during thread forming, and **in that** the moulding chamber on the profile base (19) merges radially inwardly into a pocket-shaped recess (22), thereby increasing the displacement space available for the workpiece material during thread formation and reducing the thread internal diameter (d_{I}) of the internal thread profile (27) formed.

9. Tool according to any one of the preceding claims, **characterised in that** the flute (43) on the drill section (13) has a chip breaker (47) which at least partially closes the flute (43) in the axial direction, and **in that** by means of the chip breaker (47) the removal of the chips formed in the machining process in the direction of pre-drilling is prevented and a transport of the chips from the pilot hole (1) is supported.

10. Tool according to claim 9, **characterised in that** the chip breaker (47) is formed directly on the tool tip, and/or **in that** the chip breaker (47) is formed while reducing the flute depth (t_{N}) to a reduced flute depth (t_{L}).

11. Tool according to claim 9 or 10, **characterised in that** the chip breaker (47) has a chip guide surface (49) which converges on the drill section (13) with a radially outer free surface (45), forming the longitudinal cutting edge (23), and/or **in that** the chip guide surface (49) merges at an end-side transition edge (51) into an end face (53) forming the tool tip.

12. Tool according to claim 11, **characterised in that** the end-side transition edge (51) delimits a free flute opening region (55) which opens into the tool end face (53).

13. Tool according to any one of the preceding claims, **characterised in that** the tool (9) has a central cooling channel (57) which is guided by the tool clamping shank (21) in the direction of the tool tip, and **in that** the central cooling channel (57) is in flow communication with an outlet channel (59), which opens into the flute (43), so that in the machining process the coolant (K) in the central cooling channel (57) is guided to the tool tip and is guided counter-rotating thereto in the outlet channel (59) from a mouth opening (61) into the flute (43) in order to support the chip removal.

14. Tool according to claim 13, **characterised in that** in particular when using the tool (9) in a blind hole (1), both the central cooling channel (57) and the outlet channel (59) open into the tool end face (53) in order to provide the flow connection (K) between the central cooling channel (57) and the outlet channel (59), and **in that** the flow cross-section of the central cooling channel (57) is greater than the total cross section of the flute opening region (55) and the outlet channel (59).

## Revendications

1. Outil pour la génération d'un filetage intérieur (7) dans un avant-trou de pièce (1) avec un diamètre extérieur de filetage (d_{A}) et un diamètre d'âme de filetage (d_{K}), lequel outil (9) présente une section de formation de filetage (11), avec laquelle un profil de filetage intérieur (27) peut être généré dans une paroi d'avant-trou qui présente le diamètre extérieur de filetage (d_{A}) et un diamètre intérieur de filetage (d_{I}), dans lequel l'outil (9) présente une section de perçage (13) avec laquelle le diamètre intérieur de filetage (d_{I}) du profil de filetage intérieur (27) dans un usinage de copeaux peut être étendu jusqu'au diamètre d'âme de filetage (d_{K}), dans lequel au moins une rainure à copeaux (43) est associée à la section de perçage (13) de l'outil (9), au moyen de laquelle les copeaux produits lors de l'élargissement du diamètre intérieur de filetage (d_{I}) jusqu'au diamètre d'âme de filetage (d_{K}) peuvent être enlevés, dans lequel la section de perçage (13) présente au moins une coupe longitudinale (23) avec une arête de coupe longitudinale (25) radialement extérieure, **caractérisé en ce que** l'arête de coupe longitudinale (25) s'étend dans le sens axial d'outil entre deux coins de coupe (29, 31), et que l'arête de coupe longitudinale (25) présente un profil de bord plié radialement vers l'intérieur, moyennant quoi des arêtes de surfaces de coupe peuvent être ébarbées sur le filetage intérieur (7) généré.

2. Outil selon la revendication 1, **caractérisé en ce que** la rainure de serrage (43) s'étend en forme d'hélice ou linéairement le long d'un axe d'outil (W) avec une longueur de rainure (I_{N}) par la section de formation de filetage (11) et en outre en direction d'un arbre de serrage d'outil (21).

3. Outil selon la revendication 1 ou 2, **caractérisé en ce que** la section de formation de filetage (11) présente au moins une dent profilée (15) avec un sommet de dent profilée (17) radialement extérieure et un fond de dent profilée (19) radialement intérieure, espacé de celui-ci d'une hauteur de dent, et que le sommet de dent profilée (17) se trouve sur une ligne circulaire, dont le diamètre (dₛ) est supérieur au diamètre d'avant-trou (dᵥ), et que le fond de dent profilée (19) se trouve sur une ligne circulaire dont le diamètre (d_{G}) est inférieur au diamètre d'avant-trou (dᵥ).

4. Outil selon la revendication 1, 2 ou 3, **caractérisé en ce que** la section de formation de filetage (11), considérée dans un sens périphérique d'outil, présente des dents profilées (15) réparties sur la périphérie qui sont espacées sur au moins une rainure de lubrification (16) s'étendant axialement les unes des autres, par laquelle, lors de la formation de filetage, un moyen de lubrification et/ou de refroidissement peut être amené aux dents profilées (15), et qu'une profondeur de rainure à copeaux (t_{N}) est supérieure à une profondeur de rainure de lubrification (tₛ).

5. Outil selon l'une quelconque des revendications précédentes, **caractérisé en ce que** la section de perçage (13) est réalisée sur la pointe d'outil et se prolonge en direction d'un arbre de serrage d'outil (21) en la section de formation de filetage (11) et que, pendant une course de génération de filetage (G), la section de perçage (13) est introduite sans sollicitation dans l'avant-trou de pièce (1) et dans une course d'inversion (R) consécutive la section de perçage (13) perce le profil de filetage intérieur (27) en finissant le filetage intérieur (7) jusqu'au diamètre d'âme de filetage (d_{K}).

6. Outil selon la revendication 5, **caractérisé en ce que** l'arête de coupe longitudinale (25) se prolonge sur un coin de coupe (29) éloigné de la pointe d'outil en une coupe transversale (33), et que l'enlèvement de matériau est effectué au moyen de la coupe transversale (33) et la coupe longitudinale (23) lors de la course d'inversion (R).

7. Outil selon l'une quelconque des revendications 1 à 4, **caractérisé en ce que** la section de formation de filetage (11) est réalisée directement sur la pointe d'outil et la section de perçage (13) est décalée d'un déport axial de la pointe d'outil, et que la section de perçage (13) perce, pendant la course de génération de filetage (G), le profil de filetage intérieur (27) jusqu'au diamètre d'âme de filetage (d_{K}) et est guidée hors du filetage intérieur (7) dans la course d'inversion (R) consécutive sans sollicitation.

8. Outil selon l'une quelconque des revendications précédentes, **caractérisé en ce que** la zone de génération de filetage (11) présente dans le sens axial au moins deux dents profilées (15), dont les flancs dentés (18) tournés l'un vers l'autre forment une chambre de formation dans laquelle, lors de la formation de filetage, le matériau de pièce est déplacé sous déformation plastique dans celle-ci, et que la chambre de formation se prolonge sur le fond de profil (19) radialement vers l'intérieur en un évidement en forme de poche (22), moyennant quoi l'espace de déplacement disponible lors de la formation de filetage est agrandi pour le matériau de pièce et le diamètre intérieur de filetage (d_{I}) du profil de filetage intérieur (27) formé est réduit.

9. Outil selon l'une quelconque des revendications précédentes, **caractérisé en ce que** la rainure à copeaux (43) présente sur la section de perçage (13) un étage de guidage de copeaux (47) qui ferme au moins partiellement la rainure à copeaux (43) dans le sens axial et qu'au moyen de l'étage de guidage de copeaux (47) l'évacuation des copeaux formés dans le processus d'usinage est empêchée en direction de l'avant-trou et un transport des copeaux hors de l'avant-trou (1) est soutenu.

10. Outil selon la revendication 9, **caractérisé en ce que** l'étage de guidage de copeaux (47) est réalisé directement sur la pointe d'outil, et/ou que l'étage de guidage de copeaux (47) est formé en réduisant la profondeur de la rainure à copeaux (t_{N}) à une profondeur de rainure à copeaux (t_{L}) réduite.

11. Outil selon la revendication 9 ou 10, **caractérisé en ce que** l'étage de guidage de copeaux (47) présente une surface de guidage de copeaux (49) qui converge sur la section de perçage (13) avec une surface libre (45) radialement extérieure, et ce en formant la coupe longitudinale (23) et/ou que la surface de guidage de copeaux (49) se prolonge sur une arête de transition (51) côté avant en une surface avant (53) formant la pointe d'outil.

12. Outil selon la revendication 11, **caractérisé en ce que** l'arête de transition (51) côté avant délimite une zone d'ouverture de rainure à copeaux (55) libre qui débouche dans la surface avant d'outil (53).

13. Outil selon l'une quelconque des revendications précédentes, **caractérisé en ce que** l'outil (9) présente un canal de refroidissement central (57) qui est guidé par l'arbre de serrage d'outil (21) en direction de la pointe d'outil, et que le canal de refroidissement central (57) est en liaison d'écoulement avec un canal de sortie (59) qui débouche dans la rainure à copeaux (43) de sorte que dans le processus d'usinage le moyen de refroidissement (K) soit guidé dans le canal de refroidissement central (57) vers la pointe d'outil et soit guidé en sens contraire à celui-ci dans le canal de sortie (59) hors d'une ouverture d'embouchure (61) dans la rainure à copeaux (43) afin de soutenir l'enlèvement de copeaux.

14. Outil selon la revendication 13, **caractérisé en ce qu'**en particulier lors de l'application de l'outil (9) dans un trou borgne (1), non seulement le canal de refroidissement central (57) mais aussi le canal de sortie (59) débouchent dans le côté avant d'outil (53) afin de mettre à disposition la liaison d'écoulement (K) entre le canal de refroidissement central (57) et le canal de sortie (59), et que la section transversale d'écoulement du canal de refroidissement central (57) est supérieure à la section transversale entière de la zone d'ouverture de rainure à copeaux (55) et du canal de sortie (59).
